Europäisches Patentamt

European Patent Office

Office européen des brevets

(19)

(11) Numéro de publication: **0 411 975 A1**

# DEMANDE DE BREVET EUROPEEN

(21) Numéro de dépôt: **90401869.4**

(51) Int. Cl.5: **G02F 1/29**

(22) Date de dépôt: **28.06.90**

(30) Priorité: **25.07.89 FR 8909997**

(43) Date de publication de la demande:
**06.02.91 Bulletin 91/06**

(84) Etats contractants désignés:
**DE GB IT**

(71) Demandeur: **THOMSON-CSF**
**51, Esplanade du Général de Gaulle**
**F-92800 Puteaux(FR)**

(72) Inventeur: **Joffre, Pascal**

**THOMSON-CSF, SCPI, Cédex 67**
**F-92045 Paris la Défense(FR)**
Inventeur: **Illiaquer, Gérard**
**THOMSON-CSF, SCPI, Cédex 67**
**F-92045 Paris la Défense(FR)**
Inventeur: **Huignard, Jean-Pierre**
**THOMSON-CSF, SCPI, Cédex 67**
**F-92045 Paris la Défense(FR)**

(74) Mandataire: **Chaverneff, Vladimir et al**
**THOMSON-CSF SCPI**
**F-92045 PARIS LA DEFENSE CEDEX 67(FR)**

(54) **Déflecteur électro-optique à cristal liquide.**

(57) Le déflecteur selon l'invention comporte un film mince de cristal liquide (9, 22) de chaque côté duquel est disposé au moins un plan d'électrodes (12, 13), l'ensemble constituant un réseau de déphaseurs élémentaires quadripolaires disposés côte à côte, leurs électrodes étant portées à différentes potentiels de commande engendrant une modulation spatiale de la phase du faisceau traversant le déflecteur.

FIG.3

## DEFLECTEUR ELECTRO-OPTIQUE A CRISTAL LIQUIDE

La présente invention se rapporte un déflecteur électro-optique à cristal liquide.

Pour réaliser le balayage angulaire de faisceaux lasers de systèmes opto-électroniques tels que les lidars, on a généralement recours à des dispositifs tels que des miroirs galvanométriques, des disques holographiques ou des déflecteurs acoustooptiques. Tous ces composants sont de mise en oeuvre difficile et nécessitent des puissances de commande importantes.

Pour les dispositifs mécaniques, la vitesse du balayage est limitée à environ 1°/ms pour une section de faisceau de diamètre 1 cm. L'inertie importante des miroirs limite encore davantage le temps d'accès aléatoire.

Dans le cas des déflecteurs acoustooptiques ($LiNbO_3$, GaP,...), l'inconvénient majeur est leur pupille très dissymétrique, typiquement de 100μmx10mm, qui oblige à recourir à des optiques cylindriques de couplage. De plus, le faisceau subit une translation de fréquence fonction de l'angle de déviation qui est souvent gênante. Les angles faibles inférieurs à 1°, la transmission insuffisante, ainsi que la sensibilité à la polarisation sont autant de limites pour les sytèmes.

La présente invention a pour objet un déflecteur électro-optique permettant de dévier directement un faisceau de grande section (10cm ou plus) autorisant un accès aléatoire avec temps de réponse très court (10μs ou moins), ne provoquant pas de décalage en fréquence du faisceau dévié, et permettant d'obtenir des angles de déviation importants (10° ou plus).

Le déflecteur conforme à l'invention est caractérisé par le fait qu'il comporte un film mince de cristal liquide de chaque côté duquel est disposé au moins un plan d'électrodes, l'ensemble constituant un réseau de déphaseurs élémentaires quadripolaires disposés côte à côte, leurs électrodes étant portées à différents potentiels de commande et engendrant une modulation spatiale de la phase du faisceau traversant le déflecteur.

Selon un mode de réalisation préféré, chaque plan d'électrodes de part et d'autre du film de cristal liquide est constitué d'un peigne conducteur relié à un potentiel de polarisation, interdigité avec un réseau d'électrodes reliées chacune à différents potentiels de commande. Au moins une partie des zones interélectrodes est formée sur une couche résistive ou sur une couche capacitive.

Selon un mode de réalisation avantageux, le déflecteur conforme à l'invention comporte de chaque côté du film de cristal liquide deux plans d'électrodes dont le premier comprend deux peignes interdigités portés chacun à son propre potentiel de polarisation et formés sur une surface résistive, et le second un réseau d'électrodes portées à différents potentiels de commande, ces deux plans étant séparés par une couche isolante.

Selon un autre mode de réalisation avantageux, le déflecteur comporte de chaque côté du film de cristal liquide deux plans d'électrodes dont le premier comprend deux peignes interdigités portés chacun à son propre potentiel de polarisation et formées sur une couche capacitive, et le second un réseau d'électrodes portées à différents potentiels de commande, ces deux plans étant séparés par une couche isolante.

La présente invention sera mieux comprise à la lecture de la description détaillée de plusieurs modes de réalisation, pris comme exemples non limitatifs, et illustrés par le dessin annexé, sur lequel :

- la figure 1 est une vue en coupe simplifiée d'un film mince de cristal liquide, servant à l'explication du phénomène de biréfringence électriquement contrôlée,
- la figure 2 est une vue en coupe d'une structure bipolaire connue à cristal liquide,
- la figure 3 est une vue en coupe de déphaseur élémentaire quadripolaire, utilisée dans un déflecteur électro-optique conforme à l'invention,
- la figure 4 est un diagramme de réponse électro-optique du déphaseur de la figure 3,
- la figure 5 est un schéma électrique de modèle de la structure de la figure 3,
- la figure 6 est une vue en coupe et en plan d'un déflecteur conforme à l'invention,
- la figure 7 est une vue en plan du réseau d'électrodes de la structure de la figure 6,
- la figure 8 est un diagramme montrant le profil de phase du faisceau transmis par un déflecteur conforme l'invention,
- la figure 9 est un ensemble de diagrammes de rayonnement pour différents pas du réseau correspondant différentes configurations des signaux de commande,
- la figure 10 est une vue en coupe simplifiée d'un déflecteur à microlentilles conforme à l'invention,
- la figure 11 est une vue en coupe simplifiée d'une autre structure de déflecteur conforme à l'invention,
- la figure 12 est une vue de dessus des deux plans d'électrodes de la structure de la figure 11,
- la figure 13 est une vue en coupe simplifiée d'une structure de déflecteur à gradient d'indice conforme l'invention,
- la figure 14 est une vue de dessus d'une variante de réalisation de la couche résistive pour une structure de déphaseur conforme à l'invention,
- la figure 15 est un schéma simplifié d'un commutateur de fibres optiques utilisant des déflecteurs conformes à l'invention,
- la figure 16, est une vue simplifiée en perspective d'une couche capacitive conforme à l'invention, avec son schéma électrique équivalent cette couche pouvant remplacer la couche résistive dans les structures conformes à l'invention.

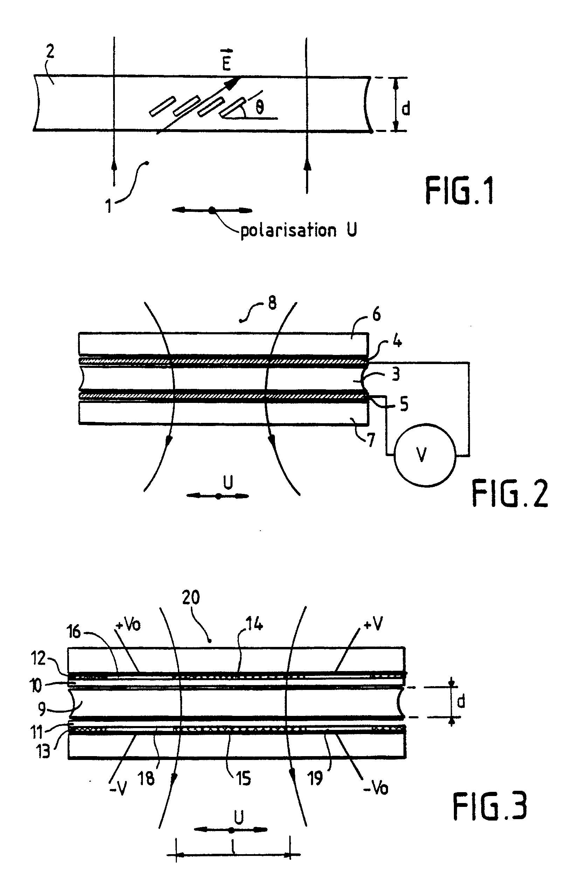

Le principe de modulation d'une onde optique polarisée 1 traversant un film 2 de cristal liquide nématique (figure 1) est connu sous le nom d'effet Freederikcsz ou Biréfringence Electriquement Contrôlée. Les molécules de cristal liquide de permittivité diélectrique $\Delta\epsilon$ importante subissent un couple $\Gamma$ tendant à les aligner dans la direction du champ électrique

$$\vec{E} .$$

L'expression de ce couple dépend de l'angle relatif $(\theta - \phi)$ entre molécules et champ :

$\Gamma = \Delta\epsilon E^2 \sin 2\,(\theta - \phi)$     (1)

A l'équilibre, le couple est nul et $\theta = \phi$. La phase optique est ainsi contrôlée de 0 à $2\pi d\,\Delta n/\lambda$ compte-tenu de l'épaisseur d et de la biréfringence $\Delta n = n_e - n_o$. Notons que pour contrôler l'amplitude de l'onde, il suffit de placer la lame de cristal liquide entre polariseur et analyseur croisés avec un angle de 45° entre eux et un facteur d $\Delta$ n égal à $\lambda/2$.

Le grand intérêt des cristaux liquides est que des épaisseurs de quelques microns sont suffisantes pour créer des variations de chemin optique d $\Delta n$ de $\lambda$. On parvient à de telles conditions dans l'infrarouge 10,6 $\mu$m avec seulement 50$\mu$m de cristal liquide cyanobiphénil dont la transparence s'étend sur un large domaine spectral de 0,5 $\mu$m à 15 $\mu$m.

Le temps de réponse est fonction du champ électrique, il varie comme l'inverse du couple $\Gamma$ et suit la relation suivante :

$\tau = \pi\,\gamma/E^2\eta\Delta\epsilon$     (2)

où $\eta$ est la viscosité statique du milieu cristal liquide. Un champ E de 10V/$\mu$m correspond à un temps voisin de 10$\mu$s. Les cristaux liquides nématiques sont donc des matériaux électro-optiques très intéressants de par leurs propriétés intrinsèques. Ces propriétés ne sont pas exploitées complètement dans une structure d'électrode bipolaire traditionnelle (figure 2) car le champ électrique ne peut avoir qu'une direction fixe perpendiculaire aux électrodes transparentes.

Cette structure de la figure 2 comporte un film 3 de cristal liquide disposé entre deux électrodes transparentes 4,5 reliées à une source de tension V. L'ensemble est enfermé entre deux lames de support 6,7 transparentes. Une onde optique polarisée 8 traverse cette structure.

C'est l'équilibre entre le couple électrique et le couple de rappel élastique qui permet effectivement le contrôle de la phase. Mais le phénomène de relaxation élastique des molécules en l'absence de champ est extrêmement lent soit 1s pour d = 25 $\mu$m. Une structure d'électrodes de type triode a déjà été proposée pour pallier cet inconvénient et a montré de bons résultats mais celle-ci reste mal adaptée pour les épaisseurs importantes de cristal liquide requises dans l'infrarouge.

La structure conforme à l'invention, et représentée en figure 3, permet d'augmenter très nettement les caractéristiques dynamiques d'un déphaseur élémentaire à cristal liquide.

Cette structure de la figure 3 comprend un film 9 de cristal liquide disposé entre deux lamelles isolantes et transparentes 10, 11. Sur chacune de ces lamelles 10, 11 on dispose une couche composite 12, 13. Chacune de ces couches composites 12, 13 comporte une bande résistive 14, 15 respectivement, sur laquelle sont formées des bandes métalliques. Les bandes métalliques formées sur la couche 12 sont référencées 16, 17 et celles qui sont formées sur la bande sont référencées 18, 19. Les bandes métalliques 16 à 19 sont les électrodes de la structure. Les bandes 16 et 18 sont en vis-à-vis l'une de l'autre, et il en est de même des bandes 17 et 19.

La direction du champ E est fonction des quatre potentiels appliqués aux électrodes 16 à 19. Les électrodes 16 et 19 étant à des potentiels de polarisation $V_o$ et $- V_o$ 17 et 18 servent à la commande proprement dite à l'aide des potentiels V et -V.

Un calcul élémentaire supposant le champ uniforme dans l'interélectrode donne l'expression de la réponse électro-optique du déphaseur :

$$\varphi(\theta) = \frac{2\pi d}{\lambda} \left[ \frac{1}{\sqrt{\frac{\cos^2\theta}{\eta_e^2} + \frac{\sin^2\theta}{\eta_o^2}}} - \eta_o \right] \qquad (3)$$

$$\theta\left(V/V_0\right) = \operatorname{arc} tg \left( \frac{\ell}{d} \cdot \frac{V/V_0 + 1}{V/V_0 - 1} \right) \qquad (4)$$

avec $n_o$ et $n_e$ = indices ordinaires et extraordinaires.

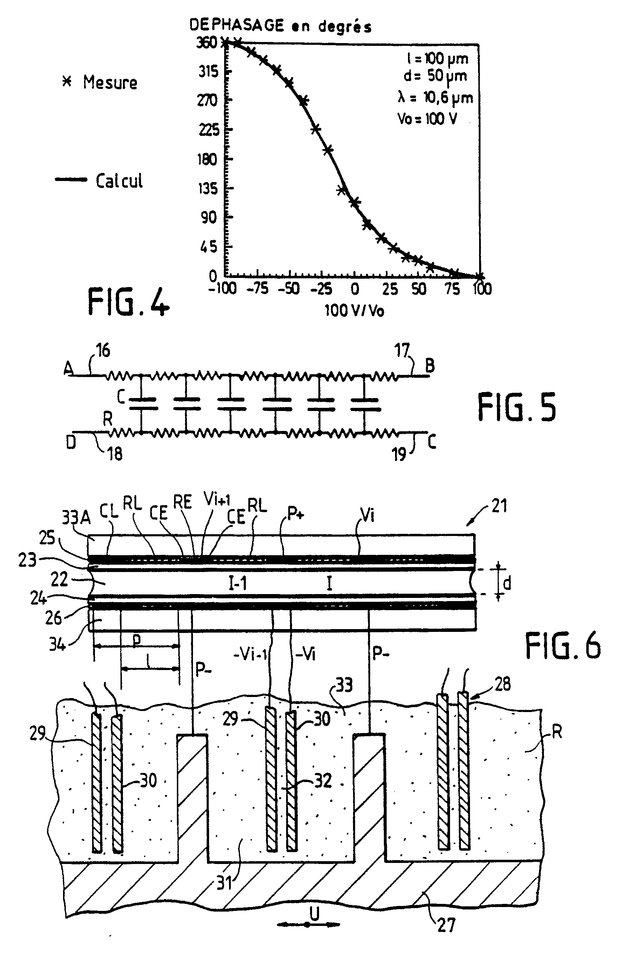

Pour une géométrie (l,d), et un cristal liquide donnés,( l étant la distance entre les électrodes 16 et 17 ou 18 et 19, c'est-à-dire la largeur des bandes 14 et 15, et d l'épaisseur du cristal liquide 9), la phase ne dépend que du rapport de tensions $V/V_0$ et non plus des conditions d'accrochage du cristal liquide sur ses parois. Une insensibilité totale aux variations de température et une grande précision en résultent. La figure 4 donne la courbe calculée $\phi$ ($V/V_0$) pour $V/V_0$ variant de -1 à +1 et montre une zone linéaire très étendue, pour les paramètres suivants : 1 = 100 $\mu$m, d = 50 $\mu$m, $\lambda$ = 10,6 $\mu$m (longueur d'onde du faisceau traversant le cristal liquide) et $V_0$ = 100 v.

L'aspect dynamique de la structure dépend des caractéristiques de la couche résistive déposée entre les électrodes 16 et 17 (ou 18 et 19). Son rôle essentiel est d'écouler suffisamment rapidement les charges électriques entre ces électrodes. Le cristal liquide se comporte comme un diélectrique pur pour des fréquences de fonctionnement supérieures à 100 Hz, ce qui est le cas généralement. Dans l'hypothèse où d≪1, on peut assimiler la structure à une ligne électrique RC conforme au schéma équivalent de la figure 5. Le modèle permet alors d'estimer la résistance R de la couche résistive pour une fréquence limite de fonctionnement $f_l$ et une géométrie d'électrode (l, d) données :

$$R = \frac{d}{2 f_\ell \varepsilon \ell^2} \qquad (5)$$

La puissance de commande par unité de surface se répartit en puissance active $P_j$ dissipée par effet Joule dans la couche résistive et en puissance réactive $P_R$ dissipée dans le générateur. Leurs expressions sont les suivantes :

$$P_j = \frac{V^2}{R\ell^2} \qquad\qquad P_R = \frac{\varepsilon}{d} V^2 f \qquad (6)$$

Lorsque la fréquence f est proche de la fréquence limite $f_l$, la puissance réactive représente la moitié de la puissance active. Ainsi, ces deux puissances sont du même ordre. La couche résistive n'entraîne qu'un accroissement raisonnable de la puissance de commande nécessaire lorsque sa résistance est optimisée pour la fréquence d'utilisation.

Le réseau 21 de la figure 6 comprend un film 22 de cristal liquide entre deux lamelles isolantes et transparentes 23,24. Chacune des lamelles 23,24 est recouverte d'une couche composite 25,26 respectivement. Chacune des couches 25,26 comporte une surface résistive R sur laquelle sont formées des électrodes conductrices présentant la configuration suivante : d'une part un peigne 27, et d'autre part un réseau 28 d'électrodes interdigité avec le peigne 27. Ce réseau 28 comporte une succession de paires d'électrodes étroites 29,30, chacune de ces paires étant disposée entre deux dents successives P + (ou P- pour la couche 26) du peigne 27, parallèlement à ces dents et centrées par rapport ces dernières. Les dents P+ sont plus larges que les électrodes 29,30. On obtient ainsi pour chacune des couches 25,26, selon une direction perpendiculaire aux électrodes, et en négligeant les parties de la couche résistive recouvertes par des électrodes conductrices, l'alternance suivante ; une bande conductrice large P+, une bande résistive large 31, une bande conductrice étroite 29, une bande résistive (ou de préférence isolante) étroite 32, une bande conductrice étroite 30, et une bande résistive large 33, et ainsi de suite. La largeur (considérée dans le sens de la succession des bandes) des bandes conductrices étroites est par exemple égale au quart de la largeur des bandes conductrices larges, celle des bandes résistives étroite égale à environ la moitié de la largeur des bandes conductrices larges, et celle des bandes résistives larges égale environ au quadruple de la largeur des bandes conductrices larges. Dans un exemple de réalisation, la largeur des bandes conductrices larges P+ (ou P-) et des bandes résistives 31 est d'environ 40 $\mu$m et 160$\mu$m respectivement. Les couches 25 et 26 sont disposées de telle façon que chaque bande conductrice large P+ ou P- de chacune de ces couches soit en vis-à-vis d'un ensemble de l'autre couche comprenant deux bandes conductrices courtes et une bande résistive étroite (29,32,30).

Les bandes conductrices larges P+ et P- des couches 25,26 sont portées à des potentiels de polarisation $V_o$ et $-V_o$. Les bandes conductrices étroites de chaque ensemble de deux bandes conductrices étroites 29,30 encadrant une bande résistive étroite 32 reçoivent respectivement, par exemple de gauche a droite sur le dessin, des paliers de tension de valeurs respectives $V_{i-2}$, $V_{i-1}$, $V_i$, $V_{i+1}$, etc... pour les électrodes de la couche 25. Dans la couche 26, les bandes conductrices étroites reçoivent des tensions ayant respectivement pour valeurs $-V_{i-2}$, $-V_{i-1}$, $-V_i$, $-V_{i+1}$,...

L'ensemble décrit ci-dessus est disposé entre deux supports transparents et isolants 33A,34.

Selon une variante, non représentée, chaque ensemble de deux bandes conductrices étroites encadrant une bande résistive étroite est remplacé par une bande conductrice ayant la largeur de cet ensemble et recevant des tensions de commande $V_i$ et $-V_i$ pour les couches 25,26 respectivement.

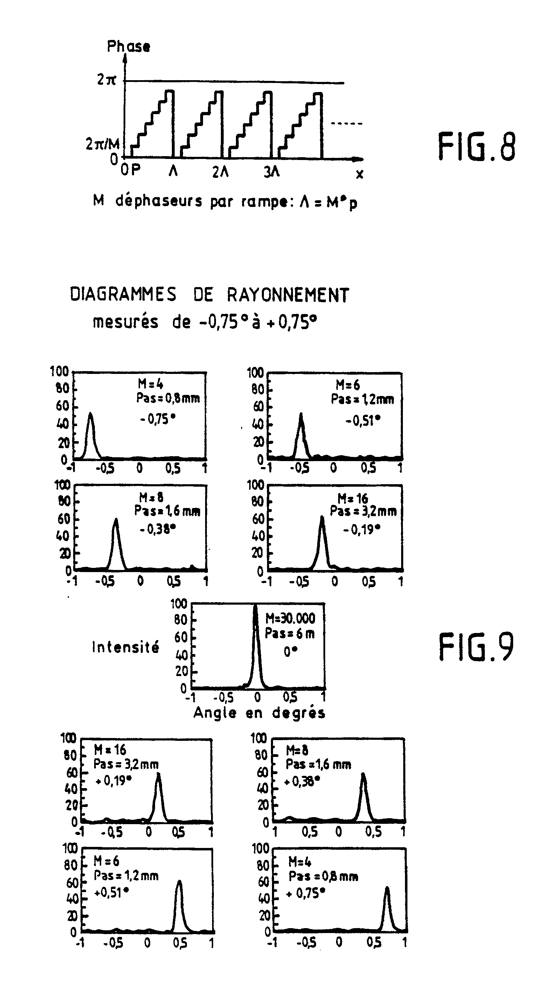

Les électrodes P+ et P- servent de polarisation et sont respectivement portées aux potentiels $V_o$ et $-V_o$. Chaque déphaseur, repéré par l'indice i, est commandé individuellement à l'aide de ses 2 électrodes aux potentiels $V_i$ et $-V_i$. Un profil de phase tel celui représenté en figure 8, linéaire, caractérisé par M niveaux espacés de $2\pi/M$ au pas p, forme un réseau spatial $\Lambda$ auquel correspond un angle de déviation $\alpha = \lambda/\Lambda$, et une efficacité de diffraction donnée par la relation suivante :

$$\frac{I_{max}}{I_{min}} = \left[ \frac{\sin \pi/M}{\pi/M} \right]^2 \qquad (7)$$

| M = | 2 | 3 | 4 | 5 | 10 |
|---|---|---|---|---|---|
| $I_{max} / I_o$ = | 40% | 68% | 81% | 88% | 97% |

La section $\Phi$ du réseau définit un lobe de diffraction d'ouverture $\lambda/\Phi$ fixant l'ouverture angulaire du point élémentaire, le nombre N de positions distinctes selon le critère de Rayleigh se déduit alors de l'angle maximum $\alpha_{max}$ correspondant à une période spatiale comportant 4 déphaseurs :

$$\alpha_{max} = \frac{\lambda}{4p} \qquad N = \frac{\Phi}{2p} \qquad (8)$$

Ce déflecteur peut aussi fonctionner avec des profils linéaires de phase de 0 à 2 m$\pi$ avec m entier, l'angle de déviation s'écrit alors $\alpha = m\,\lambda/\Lambda$. Il est possible de conserver une bonne efficacité sur un large spectre en respectant cette condition.

D'autres profils comme des profils paraboliques permettent, de façon connue en soi, de focaliser plus ou moins le faisceau pour les applications en optique adaptative (voir par exemple "Adaptative spherical lens" de S. T. KOWEL dans "Applied Optics", vol 23 n° 16/15, août 1984).

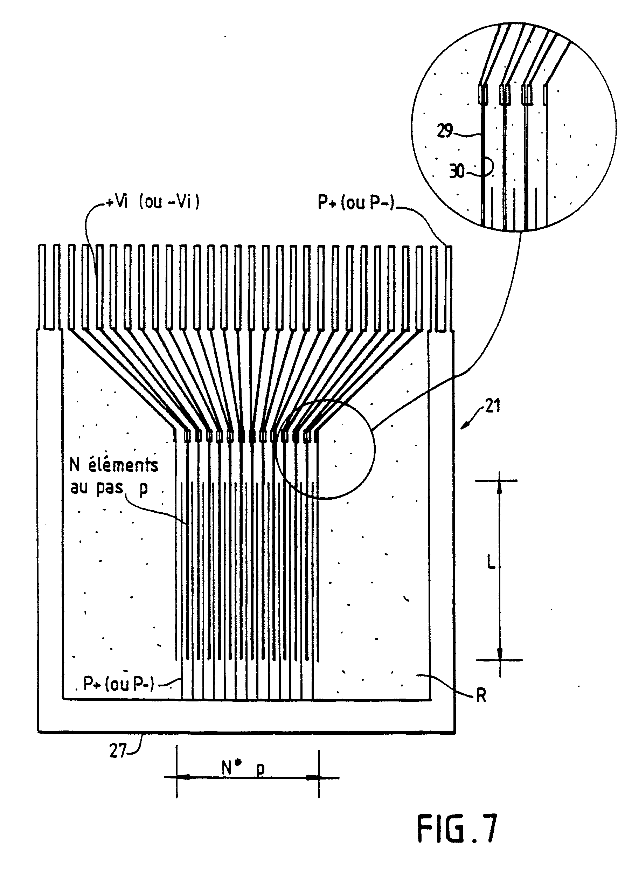

Le déflecteur à cristaux liquides représenté en figures 6 et 7 peut être réalisé de la façon suivante. Afin de fonctionner dans l'infrarouge à une longueur d'onde d'environ 10,6 $\mu$m, des supports en ZnSe sont employés. Les électrodes métalliques sont en Chrome-Or, les couches résistives en Silicium amorphe de 1000Å d'épaisseur ($R = 100M\Omega_{carré}$). Le pas des déphaseurs est de 200$\mu$m pour une distance interélectrode 1 de 160 $\mu$m. La séparation interélectrode entre déphaseurs est de 20 $\mu$m. La couche isolante, de 1 $\mu$m de polyimide, sert également à l'alignement du cristal liquide (Cyanobiphénil) dont l'épaisseur est de 50 $\mu$m. La section utile du réseau fait 10 mm x 10 mm avec 50 déphaseurs commandés individuellement en tension sinusoïdale de fréquence 1kH7 dont la valeur efficace varie de 0 à 100v.

Une déflexion de ± 0,75° est obtenue conformément à la relation (8) avec plus de 20 points résolus, comme le montre la figure 9 reportant les diagrammes de rayonnements mesurés. Le niveau pour M = 4 est à 60% du niveau sur l'axe au lieu de 80% comme le prévoit la relation (7) à cause du masquage de 20% de la pupille par les électrodes.

Le temps de réponse pour l'établissement du réseau est d'environ 1ms à $V_o$ = 100v.

Il est particulièrement intéressant d'utiliser un semi-conducteur tel GaAs ou Si, en tant que matériau de support car il est ainsi possible de réaliser des électrodes transparentes pour l'infrarouge en contrôlant simplement le dopage superficiel. Ainsi GaAs dopé Si conduit à des couches de $R < 100\Omega_{carré}$ parfaitement transparentes à $\lambda$ = 10,6 $\mu$m. Les couches résistives peuvent aussi être obtenues par cette méthode. L'implantation ionique notamment est bien adaptée à de très faibles doses. Les connexions sur ces couches doivent être des contacts ohmiques AuGe sur GaAs, Au sur Si, afin d'éviter des chutes de potentiel aux contacts.

D'autre part, on a intérêt à graver la couche résistive dans l'espace inter-éléments (tel l'espace 32 de la figure 6) de manière autoriser des tensions appliquées au cristal liquide plus importantes.

Sur support isolant tel que le verre ou le BaF$_2$, les électrodes transparentes sont réalisables en oxyde d'Indium et d'Etain (ITO) jusqu'à une longueur d'onde de 2 $\mu$m et en In$_2$O$_3$, par exemple, au-delà. Les couches résistives sont en silicium déposé en couche mince, en carbure de silicium,...

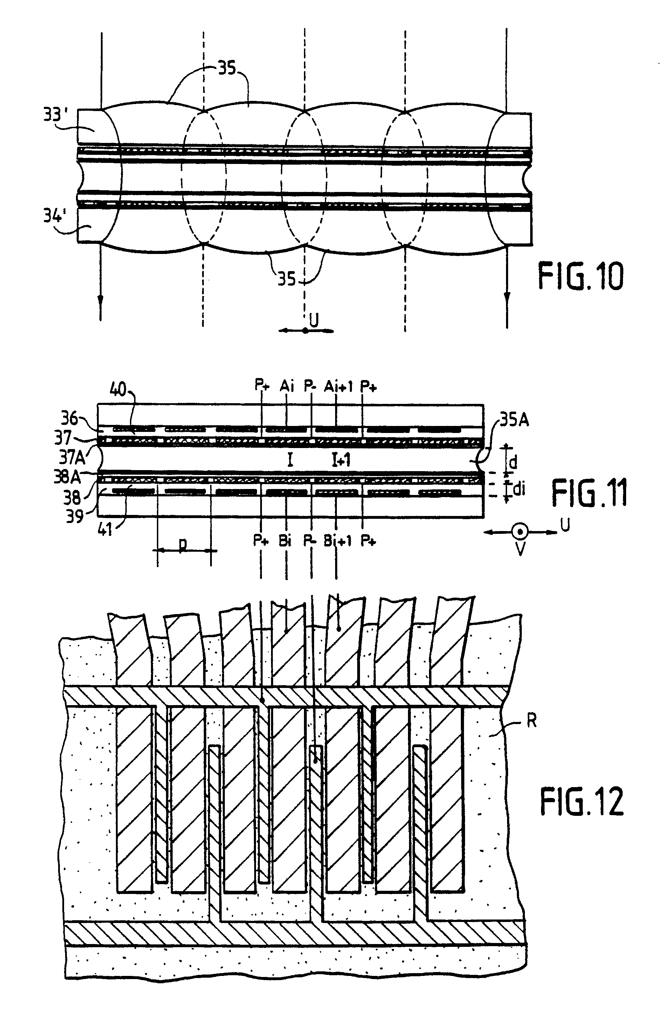

Ainsi que représenté en figure 10, en microgravant les faces externes des deux supports $33'$,$34'$ en forme de réseaux de microlentilles 35 de même pas que celui des déphaseurs, on améliore considérablement l'efficacité de diffraction. Il n'y a plus de masquage de la pupille par les électrodes et le profil de phase pour chaque déphaseur est davantage uniforme. Dans une telle structure, il est possible, à condition d'adapter convenablement les interfaces à l'aide de couches antireflets, d'obtenir une efficacité seulement limitée par l'absorption du cristal liquide soit plus de 80% à $\lambda$ = 10,6 $\mu$m.

On détermine la profondeur de gravure z en supposant le profil cylindrique permettant de calculer aisément la distance focale des lentilles que l'on ajuste à l'épaisseur des supports d'indice n vu l'épaisseur négligeable de cristal liquide :

$$\Delta z = \frac{n p^2}{8 f (n-1)} \qquad (9)$$

Soit $\Delta z$ = 0,7$\mu$m pour n = 3,3, p = 100$\mu$m et f = 3 mm. La profondeur de gravure est donc très faible et compatible avec des techniques de photogravure convenant des matériaux comme GaAs ou Ge.

Une structure, plus élaborée que la précédente est schématisée en figure 11. Celle-ci se distingue par deux niveaux d'électrodes 36(39) et 37(38) séparés par une couche isolante 40(41). Le film de cristal liquide est référencé 35A. Ce film est, de préférence, isolé des niveaux d'électrodes 37 et 38 par des couches isolantes 37A,38A respectivement. Le premier niveau 36(39) est constitué des électrodes transparentes A$_i$ - (ou B$_i$), le deuxième 37(38) des électrodes de polarisation P+ et P- formées sur une couche résistive R. Les électrodes P+ et P- sont respectivement aux potentiels $V_o$ et -$V_o$ de manière à créer un champ transverse de polarisation dans leur plan. Les tensions de commande V et -V sont appliquées sur A$_i$ et B$_i$ et créent le champ longitudinal de commande perpendiculaire. La réponse électrooptique, résultant de la combinaison de ces deux champs, est la même que celle données par la relation (3) mais avec une dépendance un peu différente pour $\theta$:

$$\theta(V/V_0) = \arctan\left(\frac{\ell}{(d+2d_i)} \cdot \frac{V/V_0 + 1}{V/V_0 - 1}\right) \quad (10)$$

avec di représentant l'épaisseur de la couche isolante 40(41).

Le principal avantage de cette configuration est d'éviter les zones à forts champs électriques de surface entre les électrodes. En effet, la couche isolante 40(41) peut tolérer des champs beaucoup plus élevés dans le sens de son épaisseur. Un champ de 120V/$\mu$m y est admissible, correspondant à un champ de 30V/$\mu$m appliqué au cristal liquide et un temps de réponse $\tau \approx 1\mu$s.

De plus, cette structure est plus favorable pour le fonctionnement de la couche résistive puisque celle-ci est surtout sollicitée pour le champ transverse, la où sa résistance est minimale. Pour le champ longitudinal, la résistance augmente par effet de champ et limite ainsi la dissipation d'énergie par effet Joule. Enfin, le masquage de la pupille dû aux électrodes est moindre et le profil de phase plus homogène. Afin de simplifier la commande, il est possible de réunir en une masse unique les électrodes Bi pour ne fonctionner qu'avec les seules électrodes Ai. Notons également que cette structure permet de traiter les deux polarisations U et V (figure 11). Pour la polarisation Y, il suffit de croiser à 90° les électrodes P+ et P- avec les électrodes $A_i$ et $B_i$. Il est ainsi possible de réaliser un déflecteur indépendant de la polarisation à l'aide de deux tels réseaux placés l'un derrière l'autre.

Cette structure peut être utilisée avantageusement comme obturateur (modulateur à 2 états ouvert ou fermé). En appliquant une basse fréquence aux bornes de P+ et P- avec ($A_i$, $B_i$) à 0, l'état transverse est très homogène et ne nécessite pas une résistance R trop basse. Par exemple, une fréquence de coupure de quelques kHz est suffisante. L'état longitudinal est obtenu au contraire avec une haute fréquence, quelques dizaines de kHz, appliquée entre $A_i$ et $B_i$ pour P+ et P- à 0.

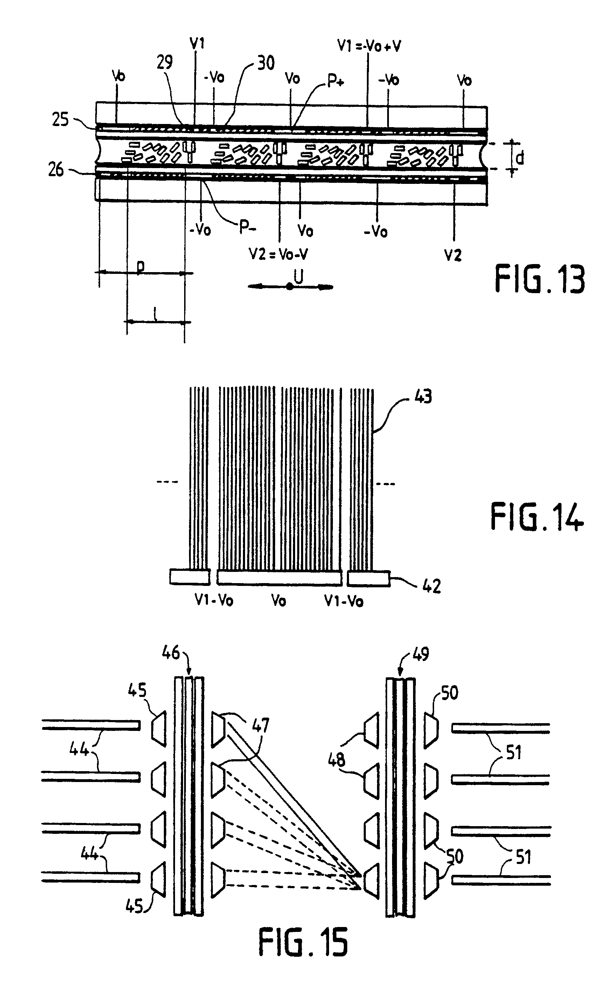

Le schéma de la figure 13 représente une structure de réseau déflecteur ("à gradient d'indice") identique à la structure à réseau quadripolaire de la figure 6 mais pour laquelle la commande électrique est simplifiée puisque réalisée par la seule tension V. Dans cette structure, les électrodes larges P+ sont portées à $V_0$, les électrodes 29 sont portées $V_1 = -V_0 + V$ et les électrodes 30 à -$V_0$ pour la couche 25. Pour la couche 26, les électrodes P-, 29 et 30 sont respectivement portées à -$V_0$, $V_2 = V_0 - V$, et $V_0$. Dans le cas de déviation maximum, l'indice varie linéairement d'un bord l'autre de chaque déphaseur élémentaire, de sa valeur extraordinaire $n_e$ sa valeur ordinaire $n_0$.

$$\alpha_{max} = \pm \frac{(n_e - n_0)\,d}{p} \quad (11)$$

Soit ± 6° avec d = 50 $\mu$m, $\Delta n$ = 0,2 et p = 100$\mu$m.

L'angle $\alpha$ compris entre -$\alpha_{max}$ et +$\alpha_{max}$ dépend de l'amplitude de la tension V appliquée, la partie négative étant obtenue en inversant $V_i$ et -$V_0$ d'une part puis $V_2$ et $V_0$ d'autre part. La loi de variation peut se déterminer à partir du calcul des lignes de champ entre les électrodes en supposant que les molécules de cristal liquide s'alignent parallèlement au champ. Le nombre de points N dépend de la longueur d'onde $\lambda$ selon la relation :

$$N = \frac{2(\Delta n\,d)}{\lambda} \quad (12)$$

On a N = 40 pour $\lambda$ = 1 $\mu$m et les mêmes conditions que ci-dessus. Une variante de cette structure (figure 14) peut être envisagée en déportant la couche résistive (couche localisée 42) à l'aide d'electrodes transparentes 43 assurant le transfert de potentiel au cristal liquide. Cette couche 42 peut alors être constituée d'un matériau plus ordinaire, comme du carbone par exemple et de forme calculée pour obtenir un profil de phase quasi-linéaire. On notera que le déport de la couche résistive peut être réalisé pour toutes les autres structures de l'invention.

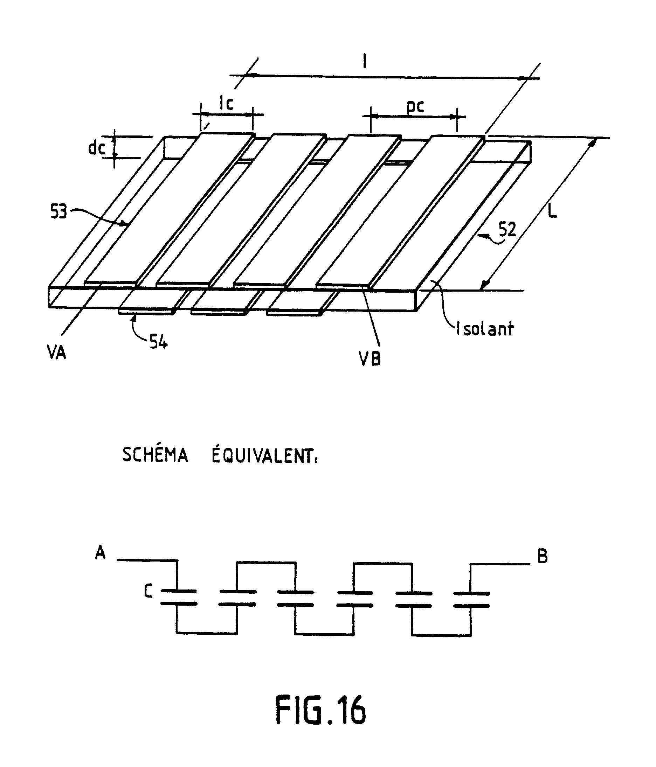

La figure 15 représente un mode de réalisation avantageux d'utilisation d'un tel déflecteur dans un système de commutation de fibres optiques. Chaque fibre d'entrée 44 d'une matrice de 30x30 par exemple, traverse successivement un afocal 45 élargissant le faisceau, un élément déflecteur 46 conforme à l'invention, et un autre afocal 47 réduisant le faisceau. Le système est identique au niveau des fibres de sortie (afocal 48, déflecteur 49, afocal 50 et fibres de sortie 51). Avec un rapport de surface de 10 entre la grande face et la petite face des afocaux 45,47,48 et 50 et une amplitude de déflexion de 3° on obtient, après l'afocal 47 un angle de déflexion de 30°, valeur convenant pour les dimensions de ce genre de systèmes.

La couche résistive utilisée dans tous ces dispositifs peut présenter des inconvénients dans certains cas ; la difficulté d'ajuster la résistance, la compatibilité délicate entre transparence et conductivité et la mauvaise tenue thermique. L'invention propose donc de remplacer la couche résistive de tous les modes de réalisation, par une couche capacitive, schématisée sur la figure 16. Cette couche capacitive 52 est constituée de deux réseaux d'électrodes transparentes 53,54 de largeur $l_c$ et de pas $p_c$, séparés par une couche isolante d'épaisseur $d_c$ et de permittivité relative $\epsilon_c$. Avec un décalage d'un demi-pas entre les deux réseaux, cette structure est équivalente à une succession de capacités placées en série dont la valeur c, par unité de longueur L, s'exprime par la relation suivante, à condition que lc = 3/4pc :

$$ C = \frac{\mathcal{E}_c\, p_c}{4\, d_c} \qquad (13) $$

soit c = 25pF/cm pour $\epsilon_c$ = 3,5, $p_c$ = 10 $\mu$m et $d_c$ = 300Å. La capacité $C_{(A,B)}$ vaut 20 fois moins soit 1,3pF/cm pour 10 pas. Les électrodes d'extrémité de l'un des réseaux sont portées respectivement à des potentiels VA et VB.

Comme dans le cas de la couche résistive de l'invention, la structure quadripolaire de l'invention est optimisée dans son fonctionnement électrique quand les impédances transverses et longitudinales sont du même ordre. Cette condition est réalisée pour 1 = 100 $\mu$m et d = 50 $\mu$m où la capacité $C_{(AB,CD)}$ vaut 1,7pf/cm.

Cette couche assure une conduction électrique dans son propre plan mais sans dissipation d'énergie, ce qui est très favorable pour sa tenue thermique et pour limiter la puissance de commande.

**Revendications**

1. Déflecteur électro-optique à cristal liquide, caractérisé par le fait qu'il comporte un film mince de cristal liquide (9,22,35A) de chaque côté duquel est disposé au moins un plan d'électrodes (12,13 ou 25,26 ou 36,39 et 37,38), l'ensemble constituant un réseau de déphaseurs élémentaires quadripolaires disposés côte à côte, leurs électrodes étant portées à différents potentiels de commande engendrant une modulation spatiale de la phase du faisceau traversant le déflecteur.

2. Déflecteur selon la revendication 1, caractérisé par le fait qu'il comporte de chaque côté du film de cristal liquide un réseau d'électrodes (29,30 ou $A_i,B_i$) reliées chacune à différents potentiels et interdigitées avec un peigne (27,P+,P-) porté à un potentiel de polarisation, le réseau et le peigne étant formés sur une couche résistive (R).

3. Déflecteur selon la revendication 1, caractérisé par le fait qu'il comporte de chaque côté du film de cristal liquide un réseau d'électrodes reliées chacune différents potentiels et interdigitées avec un peigne porté à un potentiel de polarisation, le réseau et le peigne étant formés sur une couche capacitive (figure 16).

4. Déflecteur selon la revendication 1, caractérisé par le fait qu'il comporte de chaque côté du film de cristal liquide deux plans d'électrodes (36,39-37,38) dont le premier comprend deux peignes interdigités portés chacun a son propre potentiel de polarisation et formés sur une surface résistive (R), et le second un réseau d'électrodes portées a différents potentiels de commande, ces deux plans étant séparés par une couche isolante (40,41).

5. Déflecteur selon la revendication 1, caractérisé par le fait qu'il comporte de chaque côté du film de cristal liquide deux plans d'électrodes dont l'un comprend deux peignes interdigités portés à des potentiels de polarisation différents et formées sur une couche capacitive (figure 16), et l'autre un réseau d'électrodes portées à des potentiels différents, ces deux plans étant séparés par une couche isolante.

6. Déflecteur selon l'une des revendications 1,2 ou 4, caractérisé par le fait que la couche résistive (42) est déportée.

7. Déflecteur selon l'une des revendications précédentes, caractérisé par le fait que des plaques de support au moins partiellement transparentes enserrent l'ensemble du film de cristal liquide et des électrodes, et leurs faces extérieures sont gravées en forme de réseaux de microlentilles (35).

8. Déflecteur selon l'une des revendications 1 à 4 du type à gradient d'indice, caractérisé par le fait que le plan d'électrodes est constitué d'au moins 3 peignes d'électrodes interdigités, portés à des tensions de commande différentes ($V_o$, $V_i$, $V_2$).

9. Déflecteur selon la revendication 2, caractérisé par le fait que le réseau d'électrodes comporte, entre chaque dent (P+,P-) du peigne (27) deux électrodes (29,30).

10. Déflecteur selon la revendication 9, caractérisé par le fait que la couche résistive (32) est supprimée entre les deux électrodes précitées.

FIG.1

polarisation U

FIG.2

U

FIG.3

U

**FIG.4**

DEPHASAGE en degrés

* Mesure

— Calcul

$l = 100\ \mu m$
$d = 50\ \mu m$
$\lambda = 10,6\ \mu m$
$V_0 = 100\ V$

$100\ V/V_0$

**FIG.5**

**FIG.6**

FIG.7

FIG.8

M déphaseurs par rampe: Λ = M°p

DIAGRAMMES DE RAYONNEMENT
mesurés de −0,75° à +0,75°

FIG.9

Angle en degrés

FIG.10

FIG.11

FIG.12

FIG.13

FIG.14

FIG.15

SCHÉMA ÉQUIVALENT:

FIG.16

# RAPPORT DE RECHERCHE
## EUROPEENNE

**EP 90 40 1869**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 066 334   (A.F. FRAY et al.)<br>* Abrégé *<br><br>— — — | 1 | G 02 F 1/29 |
| A | US-A-4 045 124   (POLLACK et al.)<br>* Revendication 1; figures 1-2 *<br><br>— — — | 1 | |
| A | FR-A-2 541 784   (THOMSON-CSF)<br>* Abrégé; figures 1-2; revendication 1 *<br><br>— — — — — | 1 | |

**DOMAINES TECHNIQUES
RECHERCHES (Int. Cl.5)**

G 02 F

Le présent rapport de recherche a été établi pour toutes les revendications

| Lieu de la recherche | Date d'achèvement de la recherche | Examinateur |
|---|---|---|
| La Haye | 12 novembre 90 | GALANTI M. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire
T : théorie ou principe à la base de l'invention

E : document de brevet antérieur, mais publié à la
   date de dépôt ou après cette date
D : cité dans la demande
L : cité pour d'autres raisons
........................................................................
& : membre de la même famille, document
   correspondant